# EUROPEAN PATENT SPECIFICATION

(11) **EP 2 697 025 B1**
(45) Date of publication and mention of the grant of the patent: **22.11.2017**
(21) Application number: 12713959.0
(22) Date of filing: 05.04.2012
(51) Int. Cl.: B29B 17/02

(54) **RECYCLING OF HIGH-DENSITY POLYETHYLENE FROM DOMESTIC POLYMER WASTE**
WIEDERVERWERTUNG VON POLYETHYLEN HOHER DICHTE AUS HAUSHALTSKUNSTSTOFFABFALL
RECYCLAGE DE POLYÉTHYLÈNE HAUTE DENSITÉ PROVENANT DE DÉCHETS DE POLYMÈRE MÉNAGERS

(30) Priority: 11.04.2011 EP 11161885
(43) Date of publication of application: 19.02.2014
(73) Proprietor: Total Research & Technology Feluy, 7181 Seneffe (BE)
(72) Inventor: DURANEL, Laurent, F-76600 Le Havre (FR); MLINARIC, Jean-Marie, B-5640 Biesme (BE)
(74) Representative: Raboin, Jean-Christophe
(86) International application number: PCT/EP2012/056279
(87) International publication number: WO 2012/139967

(56) References cited:
- EP-A1- 0 561 187
- WO-A1-2006/027227
- GB-A- 1 179 117
- US-A- 5 143 308
- Edward Kosior: "Closed Loop Recycling in Plastics Packaging", Pro2Pac, London , 16 March 2009 (2009-03-16), XP002657370, Retrieved from the Internet: URL:http://www.pro2pac.co.uk/files/160309_ _16h00__closed_loop_recycling.pdf [retrieved on 2011-08-23]
- SABIC: "The success of HDPE in milk packaging", Sabic in Europe: Success stories , 31 December 2008 (2008-12-31), pages 1-2, XP002657371, Retrieved from the Internet: URL:http://plastics.sabic.eu/cases/_en/mes sageinabottle.htm [retrieved on 2011-08-23]
- MONIKA HUBER ET AL: "Identification of migratable substances in recycled high density polyethylene collected from household waste", JOURNAL OF HIGH RESOLUTION CHROMATOGRAPHY., vol. 20, no. 8, 1 August 1997 (1997-08-01) , pages 427-430, XP55184737, DE ISSN: 0935-6304, DOI: 10.1002/jhrc.1240200806
- M. HUBER AND R.FRANZ: "Studies on Contamination of Post Consumer Plastic from Controlled Resources for Recycling into Food Packaging Applications", DEUTSCHE LEBENSMITTEL RUNDSCHAU, 1997, pages 328-330, XP8176076,

## Description

### Field of the invention

The present application relates to a process for recycling high density polyethylene waste from domestic polymer waste to obtain a polyethylene blend having excellent mechanical properties. The present application is further directed to such a polyethylene blend as well as to articles comprising such polyethylene blend.

### The technical problem and the prior art

Over the last decades polymers, and particularly polyolefins, have gained use in a wide range of applications, ranging for example from packaging goods with a relatively short life time of several months to durable goods, such as for example garden furniture, toys, water pipes or gas pipes, with life times from a few years to even decades. It is estimated that in 2009 about 40 % of the demand of European polymer converters of a total of 45 million tons were used in packaging applications.

A large percentage of polymer consumption for packaging applications is represented by polyolefins, mostly by polyethylenes of various densities and polypropylene. With respect to traditional packaging materials, such as for example glass and paper, polyolefin packaging allows for example light-weighting and increased shelf life of foods.

However, one of the disadvantages of polyolefins is that they are still mostly based on non-regenerative resources such as fossil fuels. Only recently efforts have been made to produce polyolefins based on regenerative resources, such as plant material.

EP 0561187 discloses blow moulded container of recycled high density polyethylene and linear low density polyethylene.
WO 2006/027227 discloses injection moulded article comprising a HDPE.
US 5143308 discloses an apparatus and process for recycling post-consumer plastic containers.
GB 1179117 claims a method for making a plastics container.
Edward Kosior, Nextek Limited, "Closed Loop Recycling in Plastics Packaging", Pro2Pac, London, March 16th, 2009, XP002657370, retrieved from internet on August 23, 2011 at: URL:http://www.pro2pac.co.uk/files/160309 1616h00 closed loop recycling.pdf, presents large scale HDPE recycling trials.
SABIC, "The success of HDPE in milk packaging", 31 December 2008, pages 1-2, XP002657371, retrieved from the internet on August 23, 2011 at: URL:http://plastics.sabic.eu/cases/ en/messageinabottle.htm,
discloses multiple layer bottles with black middle layer to block light transmission. M.Huber and R. Franz: "Studies on Contamination of Post Consumer Plastic from Controlled Resources for Recycling into Food Packaging Applications", Deutsche Lebensmittel Rundschau, 1997, pages 328-330, present studies results on contaminant content of waste polymer from food packaging.
Monika Huber and Roland Franz: "Identification of Migratable Substances in Recycled High Density Polyethylene Collected from Household Waste", Journal of High Resolution Chromatography, Vol.20, no.8, August 1997, pages 427-430, identify migratable substances isolated from HDPE collected from household waste.

Nevertheless, independently of whether polyolefins are produced from regenerative or non-regenerative resources, their production still requires energy, and in the case of regenerative sources agricultural surfaces to grow the required biomass.
Hence, recycling of polymers will remain of interest. In a large number of countries recycling systems have been established, wherein domestic polymer waste, which may also be referred to as "post-consumer polymer waste", comprising a wide range of various types of polymers (e.g. polyethylenes of various densities, polypropylenes, polystyrenes and polyethylene terephthalate) is collected. Consequently, such domestic polymer waste is quite inhomogeneous in composition and needs to be sorted by type of polymer so as to be able to reuse it.
Unfortunately, even after sorting by type of polymer it is hardly possible to re-use the recycled polymer in the same or at least a very similar application, thus allowing a complete product recycling.
Hence, there remains a need in the industry to better valorize polymer waste.
It is therefore an object of the present invention to provide a process for recycling high density polyethylene waste.
It is also an object of the present invention to provide a process for recycling high density polyethylene waste such that as much as possible of the high density polyethylene waste can be recycled and returned to the product cycle.

Further, it is an object of the present invention to provide a process that allows the high density polyethylene waste to be returned to high value applications, most preferably to the same application as the high density polyethylene had been used in before having become waste.

Additionally, it is an object of the present invention that the high density polyethylene waste can be recycled into formed articles, which have substantially the same mechanical properties as the original articles from which the high density polyethylene waste originated.

Furthermore, it is an object of the present invention that the recycled high density polyethylene recovered from the domestic polymer waste can be used in applications requiring good ESCR-properties, preferably in applications requiring a F50 time of at least 100 hours, more preferably in applications requiring a F50 time of at least 150 hours.

### Brief description of the invention

The presently named inventors have now surprisingly found that the above objectives can be attained either individually or in any combination by recovering a specific well-defined component of domestic polymer waste and blending it with a specific virgin polyethylene.

Hence, the present application provides for a process for recycling high density polyethylene from domestic polymer waste, according to claim 1.

In addition, the present application provides for a polyethylene blend comprising from 10 wt% to 90 wt% of recycled high density polyethylene and from 90 wt% to 10 wt% of a virgin polyethylene having a multimodal or broad molecular weight distribution, with weight percentages relative to the total weight of the polyethylene blend according to claim 9. Furthermore, the present application provides for articles comprising the above polyethylene composition.

### Detailed description of the invention

The term "polyethylene" is used to denote a homopolymer of ethylene or any copolymer comprising ethylene in at least 50 wt%, relative to the total weight of said copolymer.

The term "high density polyethylene", which may be abbreviated as "HDPE", is generally used to denote polyethylenes having a density of at least 940 g/cm³. This general definition does, however, not exclude that in the present application a high density polyethylenes may be defined by a different density as the above general definition.

The term "domestic polymer waste", i.e. post-consumer polymer waste, is used to denote polymer waste that is collected from private households, said domestic polymer waste comprising polymers different from polyethylene, high density polyethylene detergent packaging waste and high density polyethylene dairy packaging waste. More particularly, the term "domestic polymer waste" refers to domestic packaging waste or household packaging waste.

The term "high density polyethylene detergent packaging waste" is used to denote the component of the domestic polymer waste, which consists of high density polyethylene detergent packaging.

The term "high density polyethylene detergent packaging" is used to denote detergent packaging comprising high density polyethylene in an amount that is preferably at least 80 wt%, relative to the total weight of said high density polyethylene detergent packaging. Examples of high density polyethylene detergent packaging are packaging for personal hygiene products and household cleaning products. Non-limiting examples of personal hygiene products are shampoos, shower gels, bath gels, and the like. Non-limiting examples of household cleaning products are liquid washing gels, dish soaps, fabric softeners, bleach, and the like.

The term "high density polyethylene dairy packaging" is used to denote the component of the domestic polymer waste, which consists of high density polyethylene dairy packaging.

The term "high density polyethylene dairy packaging" is used to denote dairy packaging comprising high density polyethylene in an amount that is preferably at least 80 wt%, relative to the total weight of the high density polyethylene dairy packaging. Such high density polyethylene dairy packaging is exemplified by multilayered milk bottles, more preferably by three-layered milk bottles, comprising an internal layer of black color.

The term "virgin polyethylene" is used to denote a polyethylene directly obtained from an ethylene polymerization plant. The term "directly obtained" is meant to include that the polyethylene may optionally pass through a pelletization step or an additivation step or both.

The term "thermoplastic polymer" is used to denote polymers that soften, become liquid, and can be formed above a certain polymer-specific temperature and upon cooling solidify again. Examples of thermoplastic polymers are polyethylenes, polypropylenes, polystyrenes, polycarbonates, and polyesters.

In the present application melt indices are given as "High Load Melt Index" (HLMI), determined according to ISO 1133, condition G, at 190°C and 21.6 kg.

In general terms, the process for recycling high density polyethylene waste from domestic polymer waste comprises the steps of
(a) collecting domestic polymer waste;
(b) processing the domestic polymer waste; and
(c) producing a polyethylene blend.

Preferably, the process of the present invention further comprises the step of
(d) molding the polyethylene blend to obtain molded articles.

For the process of the present invention, it is essential that the domestic polymer waste comprises non-black high density polyethylene detergent packaging waste. Further, the domestic polymer waste may comprise one or more components selected from the group consisting of polymers different from polyethylene, high density polyethylene detergent packaging waste comprising a black component and high density polyethylene dairy packaging waste.

### PROCESSING THE DOMESTIC POLYMER WASTE

Following its collection, the domestic polymer waste needs to be processed. Processing the domestic waste comprises the steps of
(b-1) recovering the non-black high density polyethylene detergent packaging waste from the domestic polymer waste by separating said non-black high density polyethylene detergent packaging waste from the remainder of the domestic polymer waste,
(b-2) cleaning, and
(b-3) grinding,
to obtain flakes of recycled high density polyethylene, wherein steps (b-1), (b-2) and (b-3) can be in any order.

Steps (b-1), (b-2) and (b-3) may be performed in any order. Thus, they may be performed in the order (b-1), (b-2) and (b-3); or in the order (b-1), (b-3) and (b-2); or in the order (b-2), (b-1) and (b-3); or in the order (b-2), (b-3) and (b-1); or in the order (b-3), (b-1) and (b-2); or in the order (b-3), (b-2) and (b-1). Preferably, step (b-1) is performed first, followed by steps (b-2) and (b-3) in any order. Hence, preferred orders are (b-1), (b-2) and (b-3) as well as (b-1), (b-3) and (b-2).

If the steps are performed in the order (b-1), (b-2) and (b-3), processing the domestic waste comprises the steps of:
(b-1) recovering the non-black high density polyethylene detergent packaging waste by separation from the remainder of domestic polymer waste,
(b-2) cleaning said non-black high density polyethylene detergent packaging waste to obtain clean non-black high density polyethylene detergent packaging waste, and
(b-3) grinding said clean non-black high density polyethylene detergent packaging waste to obtain flakes of recycled high density polyethylene.

If the steps are performed in the order (b-1), (b-3) and (b-2), processing the domestic waste comprises the steps of:
(b-1) recovering the non-black high density polyethylene detergent packaging waste by separation from the remainder of domestic polymer waste,
(b-3) grinding said non-black high density polyethylene detergent packaging waste to obtain flakes of non-black high density polyethylene detergent packaging waste, and
(b-2) cleaning said non-black high density polyethylene detergent packaging waste flakes to obtain flakes of recycled high density polyethylene.

If the steps are performed in the order (b-2), (b-1) and (b-3), processing the domestic waste comprises the steps of:
(b-2) cleaning the domestic polymer waste to obtain clean domestic polymer waste,
(b-1) recovering clean non-black high density polyethylene detergent packaging waste by separation from the remainder of the clean domestic polymer waste, and
(b-3) grinding said clean non-black high density polyethylene detergent packaging waste to obtain flakes of recycled high density polyethylene.

If the steps are performed in the order (b-2), (b-3) and (b-1), processing the domestic waste comprises the steps of:
(b-2) cleaning the domestic polymer waste to obtain clean domestic polymer waste,
(b-3) grinding said clean domestic polymer waste into flakes of clean domestic polymer waste, and
(b-1) recovering flakes of clean non-black high density polyethylene detergent packaging waste by separation from flakes of the remainder of the clean domestic polymer waste to obtain flakes of recycled high density polyethylene.

If the steps are performed in the order (b-3), (b-1) and (b-2), processing the domestic waste comprises the steps of:
(b-3) grinding the domestic polymer waste into flakes of domestic polymer waste,
(b-1) recovering flakes of non-black high density polyethylene detergent packaging waste by separation from flakes of the remainder of the domestic polymer waste, and
(b-2) cleaning the flakes of non-black high density polyethylene detergent packaging waste to obtain flakes of recycled high density polyethylene.

If the steps are performed in the order (b-3), (b-2) and (b-1), processing the domestic waste comprises the steps of:
(b-3) grinding the domestic polymer waste into flakes of domestic polymer waste,
(b-2) cleaning the flakes of domestic polymer waste to obtain flakes of clean domestic polymer waste, and
(b-1) recovering clean flakes of non-black high density polyethylene detergent packaging waste from flakes of the remainder of clean domestic polymer waste to obtain flakes of recycled high density polyethylene.

The separation of domestic polymer waste into fractions of "pure" polymers, i.e. of fractions having a single type of polymer each, such as for example a polyethylene fraction, a polypropylene fraction etc. can be performed by any method generally used in the industry. An example of such a method is near-infrared analysis (NIR), wherein the respective polymers are identified by their NIR-fingerprint.

The present inventors have surprisingly found that for high density polyethylene waste the presence or absence of black components can be used as an indicator for environmental stress crack resistance (ESCR) properties. When analyzing the components of domestic polymer waste the present inventors have noted that for high density polyethylene waste black components are primarily present in waste with very low or no ESCR properties. On the other hand, the absence of a black component has been found to indicate better ESCR properties. Hence, excluding black components is in fact used to recover from the domestic polymer waste a high density polyethylene having at least some ESCR properties.

Separation according to color is known as chromatic separation. In the present case, the separation is performed using the presence or absence of black components.

Respective separation systems for polymer waste are commercially available, for example from Buhler Sortex Ltd., from S+S Separation and Sorting Technology GmbH, from TITECH, or from Pellenc selective technologies. Such systems can be used to perform the selection on the domestic polymer waste as collected, but also on flakes after grinding the domestic polymer waste.

Preferably, in step (b-1) the non-black high density polyethylene detergent packaging waste (or the respective flakes) is recovered by separation from high density polyethylene dairy packaging waste (or the respective flakes) by identifying said high density dairy packaging waste through the presence of a black component. Even more preferably, in step (b-1) the non-black high density polyethylene detergent packaging waste (or the respective flakes) is recovered by separation from the high density polyethylene dairy packaging waste (or the respective flakes) by identifying said high density dairy packaging waste through the presence of a black component, wherein the presence of the black component is detected by infrared analysis or by optical analysis.

Consequently, it has been found that the resulting products have good properties if said non-black high density polyethylene detergent packaging waste, and in consequence the recycled high density polyethylene, comprises at most 10 wt% of polypropylene and at most 5 wt% of black components, relative to the total weight of said non-black high density polyethylene detergent packaging waste. Preferably, said non-black high density polyethylene detergent packaging waste, and in consequence the recycled high density polyethylene, comprises at most 8 wt%, most preferably at most 6 wt% of polypropylene, relative to the total weight of said non-black high density polyethylene detergent packaging waste. Preferably, said non-black high density polyethylene detergent packaging waste, and in consequence the recycled high density polyethylene, comprises at most 4 wt%, most preferably at most 3 wt% of black components, relative to the total weight of said non-black high density polyethylene detergent packaging waste.

Preferably, said non-black high density polyethylene detergent packaging waste, and in consequence the recycled high density polyethylene, has a density of at least 0.950 g/cm³, more preferably of at least 0.952 g/cm³, even more preferably of at least 0.954 g/cm³ and most preferably of at least 0.956 g/cm³. Preferably, said non-black high density polyethylene detergent packaging waste, and in consequence the recycled high density polyethylene, has a density of at most 0.970 g/cm³, more preferably of at most 0.968 g/cm³, even more preferably of at most 0.966 g/cm³, still even more preferably of at most 0.964 g/cm³, and most preferably of at most 0.962 g/cm³. The method for measuring the density is given in the test methods.

Preferably, said non-black high density polyethylene detergent packaging waste, and in consequence the recycled high density polyethylene, has a HLMI ("High load melt index") of at least 15 dg/min, more preferably of at least 20 dg/min, even more preferably of at least 25 dg/min, still even more preferably of at least 28 dg/min, and most preferably of at least 30 dg/min. Preferably, said non-black high density polyethylene detergent packaging waste, and in consequence the recycled high density polyethylene, has a HLMI of at most 50 dg/min, more preferably of at most 45 dg/min, even more preferably of at most 40 dg/min, and most preferably of at most 38 dg/min. Said non-black high density polyethylene detergent packaging waste, and in consequence the recycled high density polyethylene, has coordinates L*, a* and b* according to the CIE 1976 color space. The value of L* is at least 47, preferably at least 48, more preferably at least 49, and more preferably at least 50. The value of a* is at most -2.50, preferably at most -2.75, more preferably at most -3.00, and more preferably at most -3.25.
The value of b* is preferably at least -1.50, preferably at least -1.30, more preferably at least -1.20, still more preferably at least -1.10, and most preferably at least -1.00. L*, a* and b* are determined as indicated in the test methods using injection molded plaques.
Said non-black high density polyethylene detergent packaging waste, and in consequence the recycled high density polyethylene, is comprising at least 50 ppm, more preferably at least 80 ppm, and most preferably at least 90 ppm of limonene (1-methyl-4-(1-methylethenyl)-cyclohexene, CAS-nr. 5989-27-5). The content of limonene in the non-black high density polyethylene detergent packaging waste can be determined as indicated in the test methods.

Cleaning is done in a bath of liquid. The liquid is water. The cleaning step is used to eliminate undesired components of the domestic polymer waster. For example, polyethylene and polypropylene waste will generally float on water, while components such as metal sink.

### PRODUCING A POLYETHYLENE BLEND

The process for recycling high density polyethylene from domestic polymer waste also comprises the step of producing a polyethylene blend. Said polyethylene blend comprises recycled high density polyethylene and virgin polyethylene, with said recycled high density polyethylene having been obtained from the preceding step of processing the domestic polymer waste.

Said polyethylene blend is preferably characterized by having good ESCR properties, i.e. having a F50 time of at least 100 hours, more preferably of at least 150 hours, and most preferably of at least 200 hours, with the F50 time determined as described in the test methods.

The polyethylene blend may be produced by common blending methods, such as for example by dry-blending the components of the polyethylene blend and subsequent melt-extrusion of the blended components. Alternatively, the polyethylene blend may be produced by feeding one of the components to an extruder, wherein the other component is melt-extruded. To improve homogeneity of the polyethylene blend it is, however, preferred to first blend and then melt-extrude on a high shear extruder, such as for example a twin-screw extruder.

The polyethylene blend comprises at least 10 wt%, more preferably at least 20 wt%, even more preferably at least 30 wt%, and most preferably at least 40 wt% of said recycled high density polyethylene, relative to the total weight of the polyethylene blend. The polyethylene blend comprises at most 90 wt%, more preferably at most 80 wt%, even more preferably at most 70 wt%, and most preferably at most 60 wt% of said recycled high density polyethylene, relative to the total weight of the polyethylene blend.

The polyethylene blend comprises at most 90 wt%, more preferably at most 80 wt%, even more preferably at most 70 wt%, and most preferably at most 60 wt% of virgin polyethylene, relative to the total weight of the polyethylene blend. The polyethylene blend comprises at least 10 wt%, more preferably at least 20 wt%, even more preferably at least 30 wt%, and most preferably at least 40 wt% of virgin polyethylene, relative to the total weight of the polyethylene blend.

While, in addition to any other thermoplastic polymer comprised in the recycled high density polyethylene, the polyethylene blend may comprise other thermoplastic polymers in a minor amount, such as for example in at most 10 wt%, most preferably in at most 5 wt%, relative to the total weight of the polyethylene blend, it is nevertheless preferred that the polyethylene blend consists of recycled high density polyethylene and virgin polyethylene.

Independently of the number of components comprised in the polyethylene blend it is clear that their relative percentages in wt% add up to a total of 100 wt%.

Both, the recycled high density polyethylene as well as the virgin polyethylene may comprise additives, such as by way of example, antioxidants, light stabilizers, acid scavengers, lubricants, antistatic additives, nucleating agents, and colorants. An overview of such additives may be found in Plastics Additives Handbook, ed. H. Zweifel, 5th edition, 2001, Hanser Publishers.

The virgin polyethylene has a multimodal or a broad molecular weight distribution. Preferably it has a bimodal or a broad molecular weight distribution. Preferably, the virgin polyethylene used herein has a molecular weight distribution, defined as M_{w}/Mₙ, i.e. the ratio of weight average molecular weight M_{w} and number average molecular weight Mₙ, of at least 10, more preferably of at least 11, and most preferably of at least 12. Molecular weights can be determined by size exclusion chromatography (SEC), frequently also referred to as gel permeation chromatography (GPC), as indicated in the test methods.

The virgin polyethylene is preferably characterized by a density of at least 0.940 g/cm³, more preferably of at least 0.942, even more preferably of at least 0.944 g/cm³, still even more preferably of at least 0.946 g/cm³, and most preferably of at least 0.948 g/cm³. The virgin polyethylene is preferably characterized by a density of at most 0.980 g/cm³, more preferably of at most 0.970 g/cm³ or 0.965 g/cm³, even more preferably of at most 0.960 g/cm³ or 0.959 g/cm³, still even more preferably of at most 0.958 g/cm³, and most preferably of at most 0.957 g/cm³. The density is measured as indicated in the test methods.

Preferably the melt index of the virgin polyethylene is in the range from 1 dg/min to 40 dg/min. The melt index of the virgin polyethylene may be chosen to be appropriate for the targeted application of the articles comprising the polyethylene blend as defined in the present application.

If the articles are intended for use in consumer packaging, the melt index of the virgin polyethylene is preferably at least 15 dg/min, more preferably at least 17 dg/min, even more preferably at least 19 dg/min, still even more preferably at least 21 dg/min, and most preferably at least 23 dg/min; the melt index of the virgin polyethylene is preferably at most 40 dg/min, more preferably at most 38 dg/min or 36 dg/min, even more preferably at most 34 dg/min, still even more preferably at most 32 dg/min, and most preferably at most 30 dg/min.

If the articles are intended for use in industrial packaging, the melt index of the virgin polyethylene is preferably at least 1 dg/min, more preferably at least 2 dg/min, even more preferably at least 3 dg/min, still even more preferably at least 4 dg/min, and most preferably at least 5 dg/min; the melt index of the virgin polyethylene is preferably at most 15 or 14 dg/min, more preferably at most 13 dg/min, even more preferably at most 12 dg/min, still even more preferably at most 12 dg/min, and most preferably at most 10 dg/min.

If the virgin polyethylene has a multimodal molecular weight distribution or a bimodal molecular weight distribution it is preferably produced with a Ziegler polymerization catalyst. Ziegler polymerization catalysts are transition metal coordination catalysts, specifically titanium halide containing polymerization catalysts, preferably activated with an aluminum compound, more preferably with aluminum alkyls; these are well known to the skilled person and are for example disclosed in more detail on pages 384 to 388 of Encyclopedia of Polymer Science and Technology, Volume 2, John Wiley & Sons, Inc. Hoboken, New Jersey, USA, 2003.

To produce a multimodal polyethylene with a Ziegler polymerization catalyst, the polymerization is performed in at least two polymerization stages, each stage resulting in the production of a polyethylene having a different melt index. To control the melt index of the polyethylene, the concentration of hydrogen in each of the at least two polymerization stages is controlled. For the production of a bimodal polyethylene with a Ziegler polymerization catalyst, the polymerization is performed in two polymerization stages, the two stages differing with respect to the respective hydrogen concentration.

If the virgin polyethylene has a broad molecular weight distribution it is preferably produced in presence of a supported chromium oxide containing polymerization catalyst. Such catalysts are well known to the person skilled in the art and are for example disclosed in more detail on pages 384 to 388 of Encyclopedia of Polymer Science and Technology, Volume 2, John Wiley & Sons, Inc. Hoboken, New Jersey, USA, 2003.

The production of the virgin polyethylene is performed according to known polymerization processes by polymerizing ethylene and one or more comonomers. It is preferred that the one or more optional comonomers are alpha-olefins, more preferably alpha-olefins having from 3 to 10 carbon atoms. It is more preferred that the one or more optional comonomers are selected from the group consisting of propylene, 1-butene, 1-pentene, 1-hexene and 1-octene. It is even more preferred that the one or more optional comonomers are selected from the group consisting of 1-butene and 1-hexene. It is still even more preferred that there is one comonomer, which is either 1-butene or 1-hexene. It is most preferred that there is one comonomer, which is 1-hexene.

The polymerization of ethylene and one or more comonomers may be done in one or more slurry loop reactors or in one or more gas phase reactors or in a combination of one or more slurry loop reactors and one or more gas phase reactors using standard polymerization conditions.

### MOLDING THE POLYETHYLENE BLEND TO OBTAIN MOLDED ARTICLES

Preferably, the present process for recycling high density polyethylene from domestic polymer waste further comprises the step of molding the polyethylene blend to obtain molded articles. Preferably, the present polyethylene blend is molded by extrusion or extrusion blow molding. Most preferably, the present polyethylene blend is molded by extrusion blow molding. Extrusion and extrusion blow molding are well known to the skilled person and need not be explained in more detail.

The present application also provides for articles comprising the polyethylene blend as defined above. Examples of articles prepared by extrusion are sheet, film, pipe, and profile. Examples of extrusion blow molded articles are packaging for detergents and chemicals, bottles, containers, jerrycans, drums, gasoline and diesel tanks, storage and transport tanks, intermediate bulk containers (IBC). The present extrusion blow molded articles may be used in industrial packaging or consumer packaging. Thus, their volume may range from a few milliliters, such as for example from 10 ml, to 1000 I.

### Test methods

The melt index of polyethylene and polyethylene compositions was determined according to ISO 1133, condition G, at 190°C and 21.6 kg. Measured under these conditions the melt index is often referred to as "high load melt index", abbreviated as "HLMI".

Density was determined according to ISO 1183 at 23°C.

Environmental stress cracking resistance (ESCR) was determined in accordance with ASTM D 1693 (2008) following conditions "B", i.e. at a bath temperature of 50°C, using as surfactant Igepal CO 630 (branched polyoxyethylene nonylphenylether, CAS-nr. 68412-54-4, available for example from Sigma-Aldrich Co.) in pure form (100 %). The material to be tested was compression molded into plates of the required thickness, out of which 10 test specimens were punched. The test specimens were conditioned between 40 hours and 96 hours at 23°C, then notched, bent and placed in the bath. To check for the appearance of cracks, a robot removed the test specimens from the bath once every hour, took a picture of the test specimen and replaced them in the bath. Once cracks had been detected on all test specimens, the F50 time, i.e. the time after which 50 % of test specimens are considered "broken", was calculated. The results are given as "F50" in hours.

Color was determined as L*, a* and b* under the CIE standard in accordance with ASTM E 313 using a Gardner Spectrophotometer TCS II, working either in reflectance mode or transmission mode in the wavelength range between 380 nm and 720 nm in 10 nm steps with an observation angle of 2°. The spectrophotometer is calibrated with a standard white and a black. The measurements were performed on injection-molded plaques.

The content of limonene in a polymer can be determined as follows: Between 30 and 60 mg of polymer was placed in a PerkinElmer TurboMatrix ATD and kept at 150°C for 15 min inside a glass tube, from which volatile compounds were carried away by means of a stream of helium and condensed at -30°C in a trap. The condensed volatile compounds were removed from the trap by heating to 250°C for 10 min. The volatile compounds were then injected into a gas chromatograph with flame ionization detector (FID). The gas chromatograph was equipped with HP-5 or equivalent columns using 5% Ph-Me-siloxane in a thickness of 1 µm. The columns had a length of 60 m, and an internal diameter of 0.32 mm. 1-hexene served as external standard.

Molecular weights are determined by Size Exclusion Chromatography (SEC) at high temperature (145°C). A 10 mg polyethylene sample is dissolved at 160°C in 10 ml of trichlorobenzene (technical grade) for 1 hour. Analytical conditions for the GPCV 2000 from WATERS are :
- Injection volume: +/- 400 µl
- Automatic sample preparation and injector temperature: 160°C
- Column temperature: 145°C
- Detector temperature: 160°C
- Column set : 2 Shodex AT-806MS and 1 Styragel HT6E
- Flow rate: 1 ml/min
- Detector: Infrared detector (2800-3000 cm⁻¹)
- Calibration: Narrow standards of polystyrene (commercially available)
- Calculation for polyethylene: Based on Mark-Houwink relation (log₁₀(M_{PE}) = 0.965909 · log₁₀(M_{PS}) - 0.28264); cut off on the low molecular weight end at M_{PE} = 1000.
The molecular weight distribution (MWD) is then calculated as M_{w}/Mₙ.

### Examples

The advantages of the present process are illustrated by the following examples using a representative sample of domestic polymer waste collected in France.

### Example 1 - Processing of the domestic polymer waste

From the sample of domestic polymer waste articles made of polymers other than polyethylene were largely eliminated using a combination of NIR-analysis and color selection, wherein polyethylene articles comprising a black component, such as for example three-layered milk bottles, were eliminated. The resulting non-black high density polyethylene detergent packaging waste was subjected to a cleaning step in a water bath, wherein other waste components such as metals, could be eliminated due to differences in density, to give clean non-black high density polyethylene detergent packaging waste, which was finally subjected to a grinding step so as to obtain flakes of recycled high density polyethylene. The recycled high density polyethylene, denoted "rPE-1", was analyzed. The rPE-1 contained 5-6 wt% of polypropylene and about 1 wt% of black components, determined by hand sorting a random sample taken from the flakes of recycled high density polyethylene. Further properties of rPE-1 are given in Table I.

### Example 2 (comparative)

For comparison a recycled high density polyethylene rPE-2 was prepared as in example 1 except that polyethylene articles comprising a black component, such as for example three-layered milk bottles were not eliminated. The resulting rPE-2 contained 5-6 wt% of polypropylene and about 15 wt% of black components, estimated based on the presence of polyethylene articles comprising a black component. Further properties of rPE-2 are given in Table I.

**Table I**

| | Unit | rPE-1 | rPE-2 |
|---|---|---|---|
| HLMI | dg/min | 34 | 43 |
| Density | g/cm³ | 0.959 | 0.9696 |
| Color | | | |
| L* | | 53.13 | 44.4 |
| a* | | -5.34 | -0.77 |
| b* | | 0.30 | -2.21 |
| Limonene | ppm | 103 | not measured |

### Example 3 - Polyethylene blends

rPE-1 and rPE-2 obtained in Examples 1 and 2 were dry-blended with a bimodal virgin polyethylene (density of 0.959 g/cm³; HLMI of ca. 26 dg/min; M_{w}/Mₙ of 13.5; produced with a Ziegler polymerization catalyst in a commercial ethylene polymerization plant comprising two slurry loop reactors) and pelletized on a twin-screw extruder to obtain the respective pelletized polyethylene blends, for which ESCR-properties are given in Table II.

**Table II**

| Reference | rPE-1 | rPE-2 | Virgin PE | ESCR - F50 |
|---|---|---|---|---|
| | [wt%] | [wt%] | [wt%] | [h] |
| 1a | 100 | 0 | 0 | 60 |
| 1b | 80 | 0 | 20 | 86 |
| 1c | 60 | 0 | 40 | 110 |
| 1d | 50 | 0 | 50 | 317 |
| 1e | 40 | 0 | 60 | 440 |
| 1f | 20 | 0 | 80 | > 670 *) |
| 2a | 0 | 100 | 0 | 22 |
| 2b | 0 | 80 | 20 | 42 |
| 2c | 0 | 60 | 40 | 90 |
| 2d | 0 | 50 | 50 | 150 |
| 2e | 0 | 40 | 60 | 216 |
| 2f | 0 | 20 | 80 | 630 |

| | | | | |
|---|---|---|---|---|
| *) Test has not yet been completed. | | | | |

The comparison of ESCR-properties for the polyethylene blends with references 1a to 1f as compared to the ones for the comparative polyethylene blends 2a to 2f clearly shows that the selection of a specific fraction of the domestic polymer waste, namely the non-black high density polyethylene detergent packaging waste, results in significantly improved properties. Particularly in combination with a specifically chosen bimodal high density Ziegler polyethylene, the ESCR-properties are such that they fulfill the requirements of pure virgin polyethylene in the targeted applications of industrial and non-industrial (consumer) packaging.

General use of the present findings can be made either by recovering as much as possible of the non-black high density polyethylene detergent packaging waste and blending it with a minor amount of virgin polyethylene to result in a polyethylene blend that can be used in consumer packaging, or by blending a relatively high percentage of recycled non-black high density polyethylene detergent packaging waste into virgin polyethylene and still be able to arrive at a polyethylene blend suitable for use in industrial packaging.

Hence, overall, the present process results in higher valorization of the domestic polymer waste. Because of the good properties of the polyethylene blends obtained according to the present process it can also be assumed that the high density polyethylene will be able to complete several product cycles before having to be either turned into energy by incineration or used in a low value application.

## Claims

1. Process for recycling high density polyethylene from domestic polymer waste, said domestic polymer waste comprising polymers such as polyethylenes of various densities, polypropylenes, polystyrenes and polyethylene terephthalate, said process comprising the steps of
(a) collecting domestic polymer waste, said domestic polymer waste comprising non-black high density polyethylene detergent packaging waste;
(b) processing the domestic polymer waste comprising the steps of
(b-1) recovering non-black high density polyethylene detergent packaging waste by separation from the remainder of domestic polymer waste, wherein said non-black high density polyethylene detergent packaging waste comprises at most 10 wt% of polypropylene and at most 5 wt% of black components, relative to the total weight of said non-black high density polyethylene detergent packaging waste,
(b-2) cleaning in a bath of water to eliminate undesired components of the domestic polymer waste, and
(b-3) grinding
to obtain flakes of recycled high density polyethylene, wherein steps (b-1), (b-2) and (b-3) can be in any order, and wherein the recycled high density polyethylene obtained in step (b) has L* of at least 47, a* of at most -2.50 and b* of at least -1.50, according to the CIE 1976 color space and determined in accordance with ASTM E 313 on injection molded plaques; and
(c) producing a polyethylene blend comprising from 10 wt% to 90 wt% of said recycled high density polyethylene flakes and from 90 wt% to 10 wt% of a virgin polyethylene having a multimodal or broad molecular weight distribution, with weight percentages relative to the total weight of the polyethylene blend,
wherein said recycled high density polyethylene is comprising at least 50 ppm of limonene (1-methyl-4-(1-methylethenyl)-cyclohexene, CAS-nr. 5989-27-5).

2. Process according to claim 1, wherein in step (b-1) the non-black high density polyethylene detergent packaging waste is separated from the remainder of the domestic polymer waste by infrared analysis or by chromatic separation or by a combination of both.

3. Process according to any of the preceding claims, wherein in step (b-1) the non-black high density polyethylene detergent packaging waste comprises at most 8 wt% of polypropylene, relative to the total weight of said high density polyethylene detergent packaging waste.

4. Process according to any of the preceding claims, wherein in step (b-1) the non-black high density polyethylene detergent packaging waste comprises at most 4 wt% of black components, relative to the total weight of said high density polyethylene detergent packaging waste.

5. Process according to any of the preceding claims, wherein the virgin polyethylene has a density of at least 0.940 g/cm³ and of at most 0.980 g/cm³, determined according to ISO 1183 at 23°C.

6. Process according to any of the preceding claims, wherein the virgin polyethylene has a melt index of 1 dg/min to 40 dg/min, determined according to ISO 1133, condition G, at 190°C and 21.6 kg.

7. Process according to any of the preceding claims, wherein the multimodal virgin polyethylene has a molecular weight distribution, defined as M_{w}/Mₙ, of at least 10.

8. Process according to any of the preceding claims, further comprising the step of (d) molding said polyethylene blend to obtain molded articles.

9. Polyethylene blend comprising from 10 wt% to 90 wt% of recycled high density polyethylene and from 90 wt% to 10 wt% of a virgin polyethylene having a multimodal or broad molecular weight distribution, with weight percentages relative to the total weight of the polyethylene blend, wherein said recycled high density polyethylene is comprising at most 10 wt% of polypropylene and at most 5 wt% of black components, relative to the total weight of said recycled high density polyethylene, and wherein said recycled high density polyethylene is comprising at least 50 ppm of limonene (1-methyl-4-(1-methylethenyl)-cyclohexene, CAS-nr. 5989-27-5).

10. Polyethylene blend according to claim 9, wherein the virgin polyethylene is as further defined in any of claims 5 to 7.

11. Articles comprising the polyethylene blend of claim 9 or of claim 10.

12. Articles according to claim 11, wherein the article is selected from industrial packaging and consumer packaging.

13. Articles according to claim 11 or 12, wherein the article is selected from the group consisting of sheet, film, pipe, profile, packaging for detergents and chemicals, bottles, containers, jerrycans, drums, gasoline and diesel tanks, storage and transport tanks, and intermediate bulk containers.

## Patentansprüche

1. Verfahren zum Wiederverwerten von Polyethylen mit hoher Dichte aus Haushaltspolymerabfall, wobei der Haushaltspolymerabfall Polymere umfasst, wie z. B. Polyethylene mit diversen Dichten, Polypropylene, Polystyrole und Polyethylenterephthalat, wobei das Verfahren die Schritte umfasst:
(a) Sammeln von Haushaltspolymerabfall, wobei der Haushaltspolymerabfall nichtschwarzen Detergensverpackungsabfall aus Polyethylen mit hoher Dichte umfasst;
(b) Verarbeiten des Hausmüllpolymerabfalls, das die Schritte umfasst:
(b-1) Gewinnen von nichtschwarzem Detergensverpackungsabfall aus Polyethylen mit hoher Dichte durch Trennen vom Rest des Hausmüllpolymerabfalls, wobei der nichtschwarze Detergensverpackungsabfall aus Polyethylen mit hoher Dichte höchstens 10 Gew.-% Polypropylen und höchstens 5 Gew.-% schwarze Komponenten in Bezug auf das Gesamtgewicht des nichtschwarzen Detergensverpackungsabfalls aus Polyethylen mit hoher Dichte umfasst,
(b-2) Reinigen in einem Wasserbad, um ungewünschte Komponenten des Hausmüllpolymerabfalls zu eliminieren, und
(b-3) Zermahlen
um Flocken wiederverwerteten Polyethylens mit hoher Dichte zu erhalten, wobei die Schritte (b-1), (b-2) und (b-3) in einer beliebigen Reihenfolge sein können und wobei das in Schritt (b) erhaltene wiederverwertete Polyethylen mit hoher Dichte gemäß dem CIE-1976-Farbraum und unter Ermittlung gemäß ASTM E 313 auf spritzgegossenen Tafeln L* von zumindest 47, a* von höchstens -2,50 und b* von zumindest -1,50 aufweist; und
(c) Herstellen einer Polyethylenmischung, die 10 Gew.-% bis 90 Gew.-% der Flocken aus wiederverwertetem Polyethylen mit hoher Dichte und 90 Gew.-% bis 10 Gew.-% eines neuen Polyethylens mit einer multimodalen oder breiten Molekulargewichtsverteilung umfasst, wobei sich die Gewichtsprozentsätze auf das Gesamtgewicht der Polyethylenmischung beziehen,
wobei das wiederverwertete Polyethylen mit hoher Dichte zumindest 50 ppm Limonen (1-Methyl-4-(1-methylethenyl)-cyclohexen, CAS-Nr. 5989-27-5) umfasst.

2. Verfahren nach Anspruch 1, wobei der nichtschwarze Detergensverpackungsabfall aus Polyethylen mit hoher Dichte in Schritt (b-1) durch Infrarotanalyse oder durch chromatische Trennung oder durch eine Kombination aus beidem vom restlichen Haushaltspolymerabfall getrennt wird.

3. Verfahren nach einem der vorstehenden Ansprüche, wobei der nichtschwarze Detergensverpackungsabfall aus Polyethylen mit hoher Dichte in Schritt (b-1) höchstens 8 Gew.-% Polypropylen in Bezug auf das Gesamtgewicht des Detergensverpackungsabfalls aus Polyethylen mit hoher Dichte umfasst.

4. Verfahren nach einem der vorstehenden Ansprüche, wobei der nichtschwarze Detergensverpackungsabfall aus Polyethylen mit hoher Dichte in Schritt (b-1) höchstens 4 Gew.-% schwarze Komponenten in Bezug auf das Gesamtgewicht des Detergensverpackungsabfalls aus Polyethylen mit hoher Dichte umfasst.

5. Verfahren nach einem der vorstehenden Ansprüche, wobei das neue Polyethylen unter Ermittlung gemäß ISO 1183 bei 23 °C eine Dichte von zumindest 0,940 g/cm³ und höchstens 0,980 g/cm³ aufweist.

6. Verfahren nach einem der vorstehenden Ansprüche, wobei das reine Polyethylen unter Ermittlung gemäß ISO 1133, Bedingung G, bei 190 °C und 21,6 kg einen Schmelzindex von 1 dg/min bis 40 dg/min aufweist.

7. Verfahren nach einem der vorstehenden Ansprüche, wobei das multimodale neue Polyethylen eine Molekulargewichtsverteilung, die als M_{w}/Mₙ definiert ist, von zumindest 10 aufweist.

8. Verfahren nach einem der vorstehenden Ansprüche, das des Weiteren den Schritt umfasst:
(d) Ausformen der Polyethylenmischung, um Formartikel zu erhalten.

9. Polyethylenmischung, die 10 Gew.-% bis 90 Gew.-% wiederverwertetes Polyethylen mit hoher Dichte und 90 Gew.-% bis 10 Gew.-% eines neuen Polyethylens mit einer multimodalen oder breiten Molekulargewichtsverteilung umfasst, wobei sich die Prozentsätze auf das Gesamtgewicht der Polyethylenmischung beziehen, wobei das wiederverwertete Polyethylen mit hoher Dichte bezogen auf das Gesamtgewicht des wiederverwerteten Polyethylens mit hoher Dichte höchstens 10 Gew.-% Polypropylen und höchstens 5 Gew.-% schwarze Komponenten umfasst, und wobei das wiederverwertete Polyethylen mit hoher Dichte zumindest 50 ppm Limonen (1-Methyl-4-(1-methylethenyl)-cyclohexen, CAS-Nr. 5989-27-5) umfasst.

10. Polyethylenmischung nach Anspruch 9, wobei das neue Polyethylen ferner wie in einem der Ansprüche 5 bis 7 definiert ist.

11. Artikel, der die Polyethylenmischung nach Anspruch 9 oder 10 umfasst.

12. Artikel nach Anspruch 11, wobei der Artikel aus Industrieverpackung und Verbraucherverpackung ausgewählt ist.

13. Artikel nach Anspruch 11 oder 12, wobei der Artikel aus der Gruppe ausgewählt ist, bestehend aus Folie, Film, Rohr, Profil, Verpackung für Detergenzien und Chemikalien, Flaschen, Behältern, Kanistern, Fässern, Benzin- und Dieseltanks, Lager-und Transporttanks und Großpackmitteln.

## Revendications

1. Procédé pour recycler du polyéthylène haute densité provenant de déchets polymères ménagers, lesdits déchets polymères ménagers comprenant des polymères tels que des polyéthylènes de diverses densités, des polypropylènes, des polystyrènes et du poly(téréphtalate d'éthylène), ledit procédé comprenant les étapes consistant à
(a) collecter des déchets polymères ménagers, lesdits déchets polymères ménagers comprenant des déchets d'emballages pour détergents en polyéthylène haute densité non noirs ;
(b) traiter les déchets polymères ménagers, le traitement comprenant les étapes consistant à
(b-1) récupérer des déchets d'emballages pour détergents en polyéthylène haute densité non noirs par séparation d'avec le reste desdits déchets polymères ménagers, lesdits déchets d'emballages pour détergents en polyéthylène haute densité non noirs comprenant au plus 10 % en poids de polypropylène et au plus 5 % en poids de composants noirs, par rapport au poids total desdits déchets d'emballages pour détergents en polyéthylène haute densité non noirs,
(b-2) nettoyer dans un bain d'eau pour éliminer les composants non souhaités des déchets polymères ménagers, et
(b-3) broyer,
pour obtenir des copeaux de polyéthylène haute densité recyclé, les étapes (b-1), (b-2) et (b-3) pouvant être dans n'importe quel ordre, et le polyéthylène haute densité recyclé obtenu dans l'étape (b) ayant une valeur L* d'au moins 47, une valeur a* d'au plus -2,50 et une valeur b* d'au moins -1,50, conformément à l'espace de couleurs CIE 1976, déterminées conformément à la norme ASTM E 313 sur des plaques moulées par injection ; et
(c) produire un mélange de polyéthylène comprenant de 10 % en poids à 90 % en poids desdits copeaux de polyéthylène haute densité recyclé et de 90 % en poids à 10 % en poids d'un polyéthylène vierge ayant une distribution large ou multimodale des masses moléculaires, les pourcentages en poids étant rapportés au poids total du mélange de polyéthylène,
dans lequel ledit polyéthylène haute densité recyclé comprend au moins 50 ppm de limonène (1-méthyl-4-(1-méthyléthényl)cyclohexène, CAS N° 5989-27-5).

2. Procédé selon la revendication 1, dans lequel, dans l'étape (b-1), les déchets d'emballages pour détergents en polyéthylène haute densité non noirs sont séparés du reste des déchets polymères ménagers par analyse infrarouge ou par séparation chromatique ou par une combinaison des deux.

3. Procédé selon l'une quelconque des revendications précédentes, dans lequel, dans l'étape (b-1), les déchets d'emballages pour détergents en polyéthylène haute densité non noirs comprennent au plus 8 % en poids de polypropylène par rapport au poids total desdits déchets d'emballages pour détergents en polyéthylène haute densité.

4. Procédé selon l'une quelconque des revendications précédentes, dans lequel, dans l'étape (b-1), les déchets d'emballages pour détergents en polyéthylène haute densité non noirs comprennent au plus 4 % en poids de composants noirs par rapport au poids total desdits déchets d'emballages pour détergents en polyéthylène haute densité.

5. Procédé selon l'une quelconque des revendications précédentes, dans lequel le polyéthylène vierge a une masse volumique, déterminée conformément à la norme ISO 1183 à 23°C, d'au moins 0,940 g/cm³ et d'au plus 0,980 g/cm³.

6. Procédé selon l'une quelconque des revendications précédentes, dans lequel le polyéthylène vierge a un indice de fluage, déterminé conformément à la norme ISO 1133, condition G, à 190°C et sous 21,6 kg, de 1 dg/min à 40 dg/min.

7. Procédé selon l'une quelconque des revendications précédentes, dans lequel le polyéthylène vierge multimodal a une distribution des masses moléculaires, définie par M_{w}/Mₙ, d'au moins 10.

8. Procédé selon l'une quelconque des revendications précédentes, comprenant en outre l'étape consistant à
(d) mouler ledit mélange de polyéthylène pour obtenir des articles moulés.

9. Mélange de polyéthylène comprenant de 10 % en poids à 90 % en poids de polyéthylène haute densité recyclé et de 90 % en poids à 10 % en poids d'un polyéthylène vierge ayant une distribution large ou multimodale des masses moléculaires, les pourcentages en poids étant rapportés au poids total du mélange de polyéthylène, dans lequel ledit polyéthylène haute densité recyclé comprend au plus 10 % en poids de polypropylène et au plus 5 % en poids de composants noirs, par rapport au poids total dudit polyéthylène haute densité recyclé, et dans lequel ledit polyéthylène haute densité recyclé comprend au moins 50 ppm de limonène (1-méthyl-4-(1-méthyléthényl)cyclohexène, CAS N° 5989-27-5).

10. Mélange de polyéthylène selon la revendication 9, dans lequel le polyéthylène vierge est tel que davantage défini dans l'une quelconque des revendications 5 à 7.

11. Articles comprenant le mélange de polyéthylène de la revendication 9 ou de la revendication 10.

12. Articles selon la revendication 11, lesquels articles sont choisis parmi les emballages industriels et les emballages ménagers.

13. Articles selon la revendication 11 ou 12, lesquels articles sont choisis dans le groupe constitué par les feuilles, les films, les tuyaux, les profilés, les emballages pour détergents et produits chimiques, les bouteilles, les récipients, les jerrycans, les fûts, les réservoirs pour essence et diésel, les réservoirs de stockage et de transport, et les grands récipients pour vrac.
